(19) Europäisches Patentamt
European Patent Office
Office européen des brevets

(11) **EP 1 198 906 B1**

(12) **FASCICULE DE BREVET EUROPEEN**

(45) Date de publication et mention
de la délivrance du brevet:
**29.09.2004 Bulletin 2004/40**

(21) Numéro de dépôt: **00956588.8**

(22) Date de dépôt: **01.08.2000**

(51) Int Cl.⁷: **H04B 7/26**

(86) Numéro de dépôt international:
**PCT/FR2000/002210**

(87) Numéro de publication internationale:
**WO 2001/011803 (15.02.2001 Gazette 2001/07)**

(54) **PROCEDE DE RADIOCOMMUNICATION ENTRE UNE STATION DE BASE ET DES TERMINAUX MOBILES, STATIONS DE BASE ET TERMINAUX MOBILES POUR LA MISE EN OEUVRE D'UN TEL PROCEDE**

FUNKÜBERTRAGUNGSVERFAHREN ZWISCHEN EINER BASISSTATION UND MOBILEN ENDGERÄTEN, BASISSTATION UND MOBILE ENDGERÄTE DAFÜR

RADIOCOMMUNICATION METHOD BETWEEN A BASE STATION AND MOBILE TERMINALS, BASE STATIONS AND MOBILE TERMINALS FOR IMPLEMENTING SAME

(84) Etats contractants désignés:
**AT BE CH CY DE DK ES FI FR GB GR IE IT LI LU MC NL PT SE**

(30) Priorité: **06.08.1999 FR 9910261**

(43) Date de publication de la demande:
**24.04.2002 Bulletin 2002/17**

(73) Titulaire: **Eads Telecom
78180 Montigny Le Bretonneux (FR)**

(72) Inventeurs:
• **MARQUE-PUCHEU, Gérard
F-78480 Verneuil-sur-Seine (FR)**
• **LAMBOURG, Michel
F-92370 Chaville (FR)**

(74) Mandataire: **Loisel, Bertrand
Cabinet Plasseraud
65/67 rue de la Victoire
75440 Paris Cedex 09 (FR)**

(56) Documents cités:
**EP-A- 0 480 505          EP-A- 0 884 864**

**Description**

La présente invention concerne le domaine des radiocommunications entre des stations de base et des terminaux mobiles, utilisant un multiplexage temporel de canaux logiques sur une fréquence porteuse.

Les systèmes de radiocommunications avec les mobiles utilisent deux méthodes principales pour le transfert de la signalisation entre le terminal mobile et l'infrastructure radio.

Dans la première méthode, les transmissions de signalisation de l'infrastructure radio vers le terminal mobile sont non déterministes et le terminal mobile doit rester à l'écoute du canal de contrôle, démoduler l'ensemble des messages transmis par l'infrastructure aux différents terminaux mobiles et choisir ceux qui le concernent grâce à un mécanisme d'adressage.

Une autre méthode consiste à allouer, dès le début de la transaction, un canal logique de signalisation entièrement réservé à ladite transaction entre l'infrastructure radio et le terminal mobile. C'est la méthode utilisée en particulier par le système de radiotéléphonie GSM. Le canal logique défini comme une séquence régulière d'intervalles de temps montants et descendants sur lesquels sont transmises les informations de l'infrastructure vers un mobile particulier et les informations dudit mobile vers l'infrastructure radio.

Dans les systèmes de radiotéléphonie utilisant ce mécanisme, tous les canaux logiques dédiés aux transactions avec les terminaux mobiles ont le même débit, c'est-à-dire la même fréquence d'occurrence des intervalles de temps appartenant au canal de signalisation dédié.

Cette situation est bien adaptée au cas des systèmes de radiotéléphonie publics dont la principale fonction est d'établir des appels entre les terminaux mobiles et l'infrastructure du réseau public commuté. La périodicité des intervalles de temps est alors choisie de manière à permettre des temps d'établissement de communication aussi courts que possible tout en offrant un intervalle suffisant entre la transmission descendante de l'infrastructure radio vers le mobile et la transmission montante du terminal mobile vers l'infrastructure radio pour qu'une réponse de l'application soit disponible et donc que l'intervalle de temps soit utilisé de la manière la plus efficace possible.

Cette configuration du canal de signalisation dédié est beaucoup moins adaptée au cas des réseaux de radiocommunications à usage professionnel dans lesquels une plus grande variété de services est offerte et pour lesquels, un choix unique de périodicité des intervalles de temps dans les canaux de signalisation dédiés peut conduire à une inefficacité de l'utilisation du canal de contrôle.

La présente invention a pour but de remédier à cet inconvénient afin d'offrir une qualité de service toujours adaptée au service de télécommunication mis en oeuvre.

Selon l'invention, il est proposé un procédé de radiocommunication tel qu'énoncé dans la revendication 1.

Le procédé permet de répondre à des besoins de transmission variés entre des terminaux mobiles et une infrastructure radio dans le cas de réseaux de radiocommunication professionnels, de manière efficace en termes d'utilisation de la bande passante et de fréquence de mise à jour des informations. Pour chaque service, on peut choisir la fréquence de récurrence des intervalles de temps, qui détermine la cadence de mise à jour des informations et/ou le temps de réponse au service.

On peut ainsi gérer des besoins de transactions entre les terminaux mobiles et l'infrastructure radio comme par exemple l'établissement d'une communication avec le réseau téléphonique commuté, ou la localisation automatique d'un terminal mobile, avec des périodicités variables dépendant des conditions opérationnelles dans lesquelles se trouve le véhicule contenant le terminal mobile ou le piéton portant ce terminal. Le procédé peut en outre être utilisé pour offrir un service de messagerie efficace à des terminaux simplifiés (de type « pager ») portés dans des conditions usuelles pour ce type de terminaux, sans que les autres terminaux mobiles soient perturbés par la fourniture de ce service de messagerie.

Dans un mode de réalisation préféré du procédé, la fréquence de récurrence des intervalles de temps alloués à un terminal mobile à l'établissement d'un desdits canaux logiques est sélectionnée parmi un ensemble de valeurs de la forme $1/T_k$ (k = 1, 2, 3, ...) telles que $T_{k+1}/T_k$ soit un nombre entier pour tout k, $T_1$ étant une périodicité de base des intervalles de temps sur la fréquence porteuse.

L'invention se rapporte également à une station de base de radiocommunication selon la revendication 7 et à un terminal mobile de radiocommunication selon la revendication 13.

D'autres particularités et avantages de la présente invention apparaîtront dans la description ci-après d'exemples de réalisation non limitatifs, en référence aux dessins annexés, dans lesquels :

- la figure 1 est un schéma synoptique d'un exemple de station de base selon l'invention ;
- la figure 2 est un schéma synoptique d'un exemple de terminal mobile selon l'invention ;
- la figure 3 est un diagramme illustrant la structure de trames transmises sur des canaux physiques de contrôle formés dans un exemple de réalisation de l'invention ;
- les figures 4 et 5 sont des diagrammes illustrant respectivement deux structures de trames transmises sur des canaux de trafic formés dans un exemple de réalisation de l'invention ;
- la figure 6 est un schéma synoptique plus détaillé de la partie d'une station de base selon la figure 1 traitant des canaux de contrôle dédiés ;

- les figures 7 et 8 sont des organigrammes de procédures d'allocation et de libération de canaux dédiés à périodicité variable.

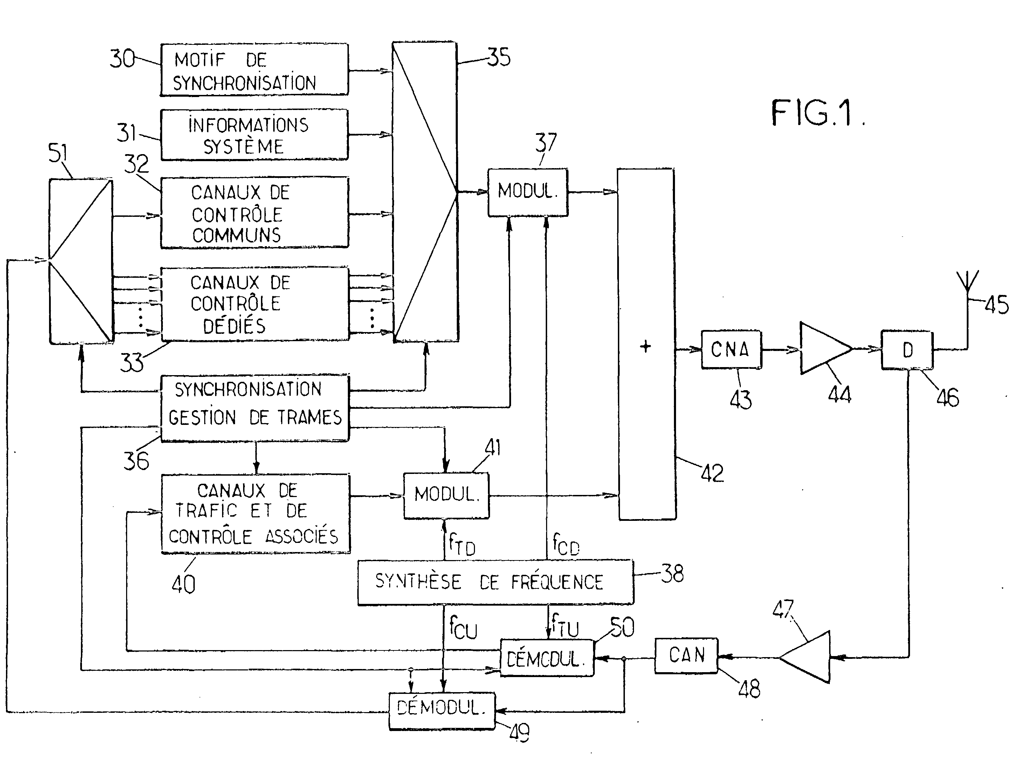

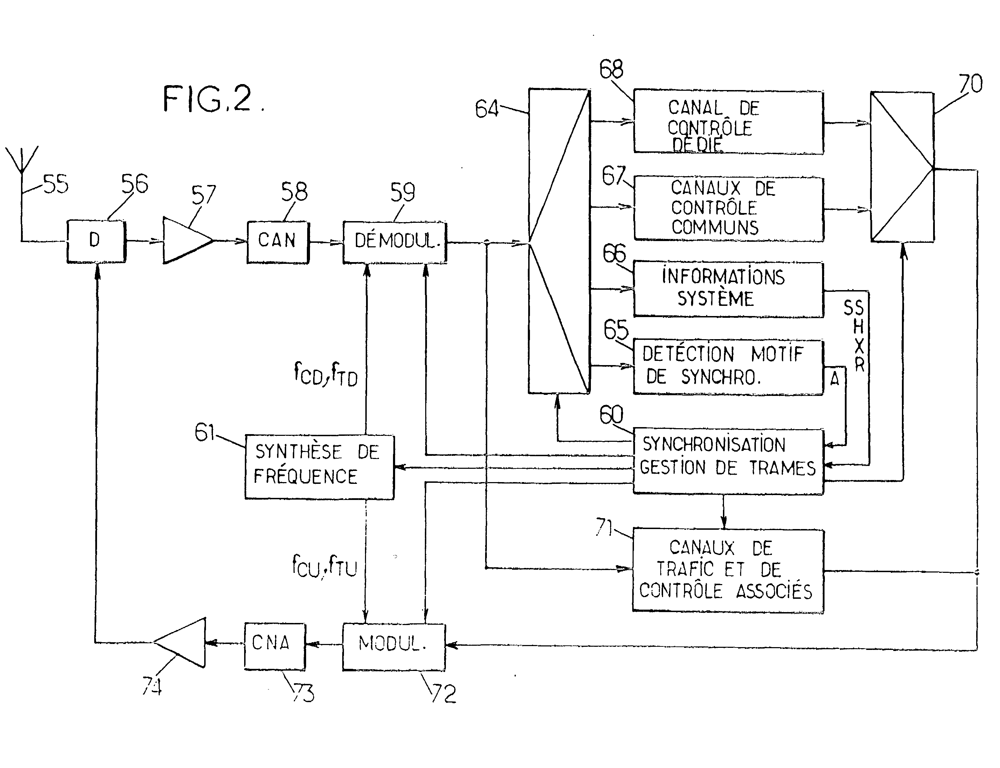

Dans la réalisation décrite ici à titre d'exemple, la station de base et le terminal mobile représentés sur les figures 1 et 2 appartiennent à un système de radiocommunication professionnelle fonctionnant en accès multiple à répartition en fréquence (FDMA). On suppose, à titre d'illustration, que ce système met en oeuvre la méthode de définition de canaux décrite dans la demande de brevet EP-A-0 896 443, utilisant pour un même service soit un plein canal avec une modulation codée par un code de rendement 1/K (mode 2), soit un canal fractionnaire de débit K fois plus faible avec une modulation non codée (mode 1), avec K = 2. On prend alors en considération des intervalles de temps élémentaires, dont la durée $d_1$ est par exemple de 20 ms, utilisés dans le mode 1, et des intervalles de temps composites, dont la durée $d_2$ = $K.d_1$ est dans cet exemple de 40 ms, utilisés dans le mode 2.

Pour chaque station de base est défini, sur une fréquence particulière $f_{CD}$, un canal physique descendant consacré à l'émission d'informations de contrôle. Symétriquement, un canal physique montant est défini sur une fréquence $f_{CU}$ pour la transmission d'informations de contrôle des terminaux mobiles vers la station de base. Ces canaux physiques de contrôle sont subdivisés en canaux logiques de contrôle par multiplexage temporel. Certains de ces canaux logiques sont des canaux communs, partagés par les terminaux mobiles à portée de la station de base. D'autres sont des canaux dédiés, que la station de base utilise pour communiquer avec des mobiles particuliers.

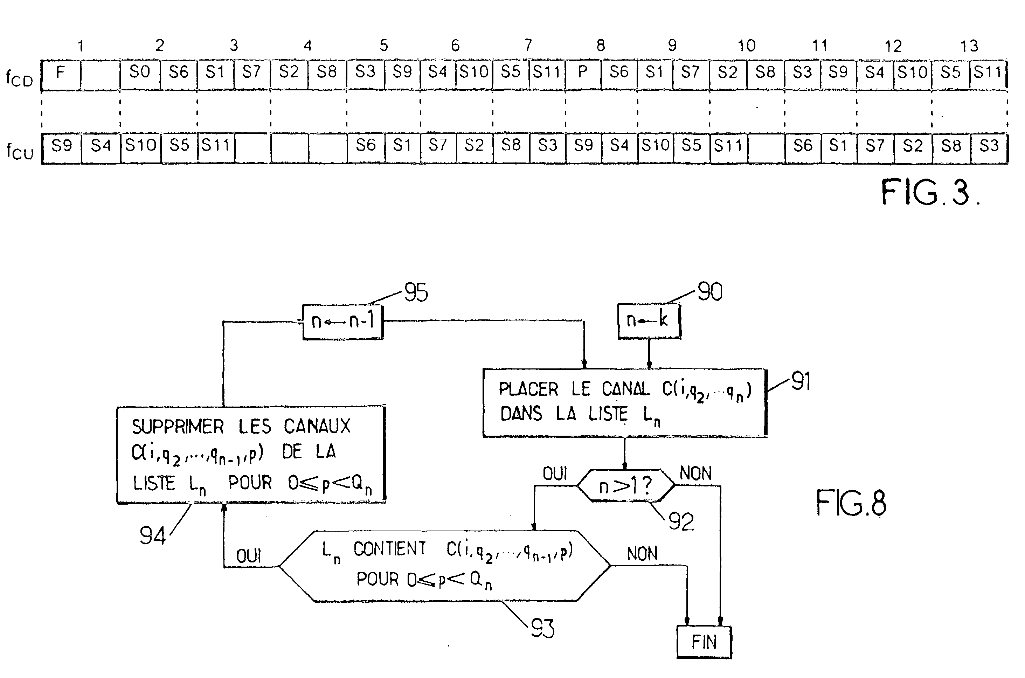

Le signal transmis sur chacun des canaux physiques de contrôle se présente sous forme de trames successives subdivisées en K.M intervalles de temps élémentaires appartenant à des canaux logiques différents. Dans l'exemple illustré par la figure 3, où M = 13, les intervalles élémentaires notés F, S0 et P se rapportent à des canaux communs descendants, et ceux notés Si (avec $1 \leq i \leq 11$) se rapportent à des canaux dédiés bidirectionnels.

Les intervalles F ont une durée $d_1'$ et sont répétés tous les K'.M intervalles de temps élémentaires, avec $d_1'$ = $d_1$ et K' = K = 2 dans l'exemple de la figure 3. Ils contiennent un motif de synchronisation formé par une séquence prédéterminée de bits permettant de réaliser la synchronisation fréquentielle et temporelle des terminaux mobiles.

Les intervalles S0 ont une durée $d_1'$ et sont répétés tous les K'.M intervalles de temps élémentaires. Ils contiennent des informations système nécessaires à la coordination entre les mobiles et la station de base, comprenant par exemple : (i) un champ H de 5 bits repérant la position de l'intervalle de temps S0 dans la supertrame courante (une supertrame représente le plus petit commun multiple entre la périodicité des canaux de trafic et celle des canaux de contrôle, soit 13x27 intervalles de temps composites dans l'exemple considéré, c'est-à-dire 14,04 s) ; (ii) un champ X de 3 bits repérant la position de l'intervalle de temps S0 dans une période plus longue (hypertrame), telle qu'une période de chiffrement de l'interface air (typiquement de l'ordre d'une heure) ; et (iii) un champ R de 3 bits indiquant le niveau minimal de champ reçu pour l'accès à la cellule (par exemple quantifié par paliers de 5 dB).

Les intervalles P servent à la station de base pour adresser des messages à des terminaux mobiles avec lesquels elle n'est pas en train de communiquer (paging). Dans le sens montant, les intervalles de temps élémentaires laissés vierges sur la figure 3, ou ceux notés Si ($1 \leq i \leq 11$) qui ne sont pas alloués en tant que canaux dédiés, peuvent être utilisés par les terminaux mobiles pour effectuer des accès aléatoires (canal commun montant).

Les intervalles Si ($1 \leq i \leq 11$) des canaux dédiés sont utilisés après une procédure d'attribution. Ils surviennent chacun deux fois par trame dans l'exemple considéré. La trame de contrôle étant de 520 ms, un intervalle de temps Si, pour i donné, intervient en moyenne toutes les 260 ms, avec une durée de 100 ms entre l'émission d'un message par la station de base sur un intervalle Si descendant et l'émission de la réponse par le terminal mobile sur le prochain intervalle Si montant, et une durée de 140 ms ou 180 ms entre l'émission d'un message par le terminal mobile sur un intervalle Si montant et l'émission de la réponse par la station de base sur le prochain intervalle Si descendant.

La station de base peut en outre établir des canaux de trafic avec un ou plusieurs terminaux mobiles situés à sa portée, après une procédure d'établissement effectuée au moyen d'un canal de contrôle dédié Si. Le canal de trafic établi avec un terminal est descendant (fréquence $f_{TD}$) et/ou montant (fréquence $f_{TU}$). Le canal de trafic est multiplexé sur la fréquence $f_{TD}$ et/ou $f_{TU}$ avec des canaux de signalisation associés servant à échanger de la signalisation en cours de communication (par exemple mesures ou commandes pour le contrôle de la puissance radio émise par les mobiles, signalisation d'appel, requêtes et commandes de changement de cellule, de préemption d'alternat, etc.).

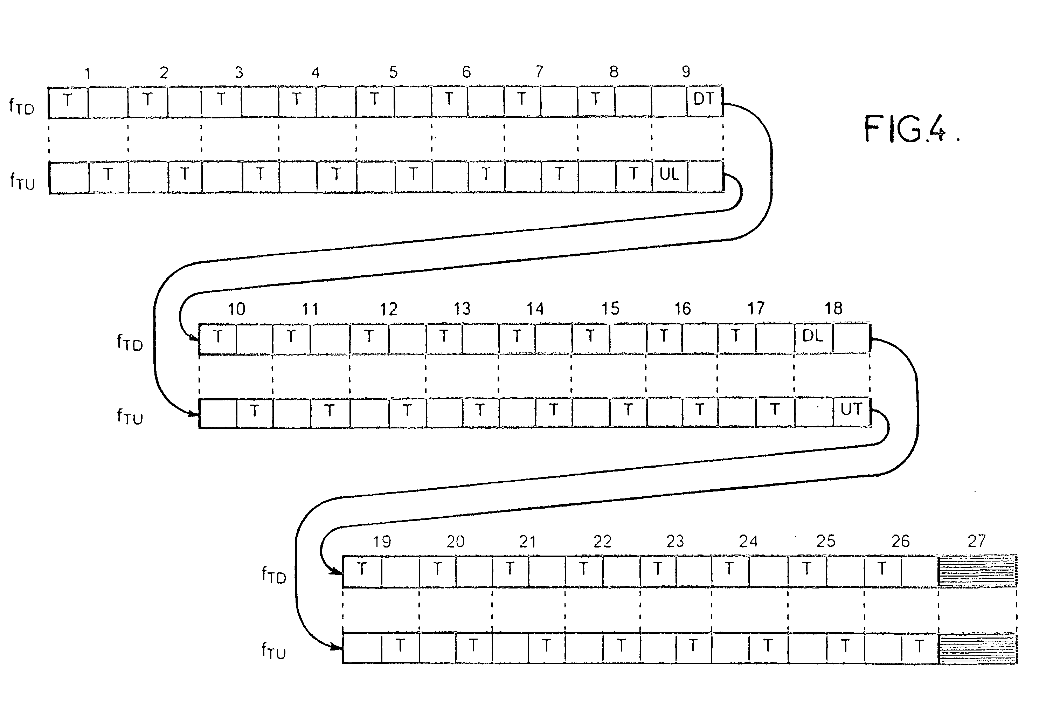

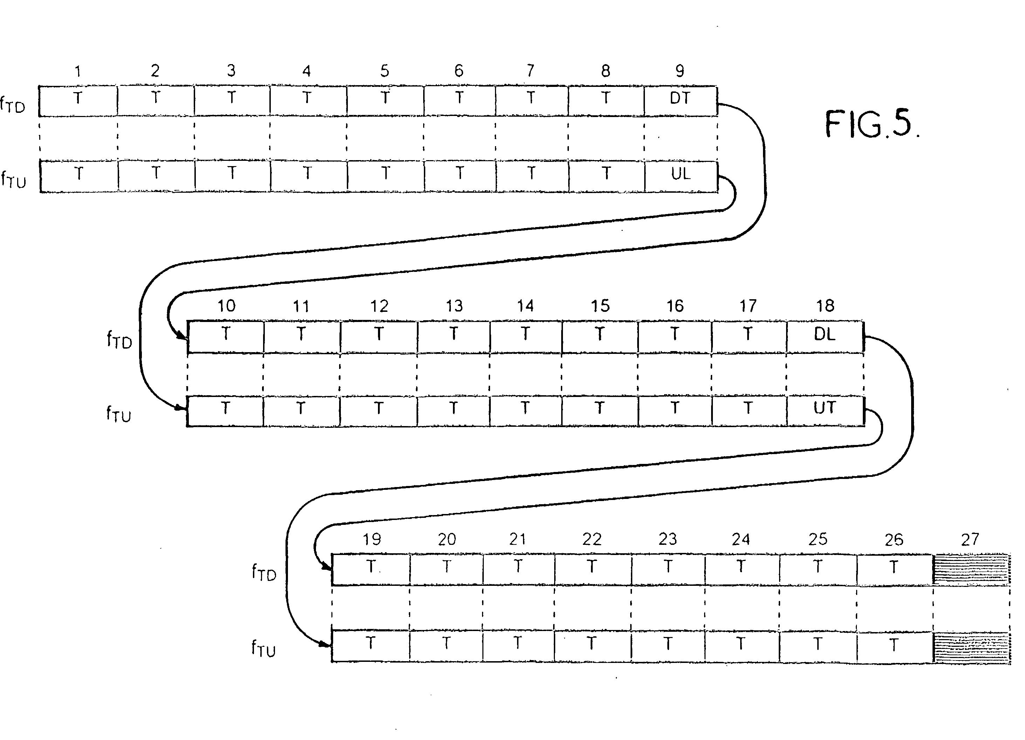

Les canaux de trafic montant et descendant peuvent avoir la structure de trame représentée sur la figure 4 correspondant au mode 1, ou celle représentée sur la figure 5 correspondant au mode 2. Chaque trame du canal de trafic a une durée correspondant à K.Q = 54 intervalles de temps élémentaires (Q = 27), et est divisée en trois parties de 18 intervalles élémentaires. Dans chacune de ces trois parties, les huit premiers intervalles de temps composites sont occupés par le canal logique de trafic. Le neuvième intervalle de temps composite est occupé par des canaux de contrôle associés pour les deux premières parties, et inoccupé pour la troisième partie. Cet intervalle inoccupé, hachuré sur les figures 4 et 5, constitue une fenêtre de scrutation pendant laquelle le terminal mobile change de fréquence pour observer les canaux physiques de contrôle des stations de base des cellules voisines, afin de pouvoir effectuer un changement de cellule si nécessaire.

Dans le mode 1 illustré par la figure 4, chacun des huit premiers intervalles de temps composites de chaque tiers de la trame comporte un intervalle élémentaire impair pour le sens descendant et un intervalle élémentaire pair pour le sens montant, repérés par la lettre T sur la figure. En conséquence, sur la même porteuse descendante $f_{TD}$, la station de base peut multiplexer un canal logique de trafic établi avec un autre terminal mobile. En outre, si le terminal mobile est capable de passer de la fréquence $f_{TD}$ à la fréquence $f_{TU}$ et vice-versa dans le court laps de temps séparant deux intervalles élémentaires, le mode 1 permet d'établir la communication en duplex temporel.

Dans le mode 2 illustré par la figure 5, les intervalles de temps composites des trames transmises sur les canaux de trafic ne sont pas subdivisés en deux intervalles élémentaires. Le signal, transmis avec le même débit d'information, fait l'objet d'une modulation codée avec un rendement de $1/K = 1/2$ comme exposé dans la demande de brevet EP-A-0 896 443, ce qui procure une meilleure sensibilité au récepteur. Avec ce mode de fonctionnement, le duplex temporel précédemment décrit ne peut pas être utilisé. Dans le cas général où les terminaux mobiles ne sont pas capables de moduler et de démoduler simultanément autour de deux fréquences porteuses différentes, ce mode de fonctionnement impose une discipline de communication de type alternat.

Dans la fenêtre de scrutation d'une trame de trafic, le terminal mobile cherche à détecter le motif de synchronisation émis dans l'intervalle de temps F de la trame de contrôle par la station de base d'une cellule voisine. Il démodule donc le signal reçu selon la fréquence $f_{CD}$ utilisée dans cette cellule voisine. Si le motif de synchronisation est détecté, le terminal utilise la même fréquence $f_{CD}$ dans la fenêtre de scrutation d'une trame suivante, et cherche à extraire les informations système émises par la même station de base dans son intervalle S0. Si ces informations sont bien reçues; le terminal mobile est prêt à changer de cellule si nécessaire.

La fenêtre de scrutation a une durée $d_2$ correspondant à un intervalle de temps composite, soit $K = 2$ intervalles élémentaires. Pour être sûr qu'au cours d'une supertrame, ces fenêtres couvrent les intervalles de temps F et S0 des trames de contrôle descendantes des cellules voisines, il est judicieux que la périodicité de ces fenêtres temporelles, et celle des intervalles de temps F et S0 sur le canal physique de contrôle, exprimées en nombre d'intervalles de temps composites, soient premières entre elles. En d'autres termes, la périodicité des fenêtres de scrutation étant de Q intervalles composites, et celle des intervalles de temps F et S0 étant de M intervalles composites, on choisit les nombres M et Q premiers entre eux, ce qui est le cas dans la réalisation décrite où M = 13 et Q = 27. Le terminal mobile scrute alors les différentes fréquences $f_{CD}$ possibles au rythme des supertrames, jusqu'à détecter le motif de synchronisation émis dans une cellule voisine.

En outre, l'intervalle de temps S0 intervenant p intervalles composites après l'intervalle de temps F sur la porteuse $f_{CD}$, avec $p < M$ (p = 1 dans l'exemple de la figure 3), il est judicieux de choisir l'entier Q de la forme q.M+p, avec q entier. Cette condition est remplie dans l'exemple décrit où p = 1, q = 2, M = 13 et Q = 27. De ce fait, lorsque le terminal mobile capte le motif de synchronisation émis par une cellule dans une fenêtre de scrutation, il peut capter les informations système émises par cette même cellule dès la fenêtre de scrutation suivante, ce qui minimise la durée du processus d'acquisition.

Sur la figure 1, le bloc 30 désigne la source du motif de synchronisation émis dans les intervalles F, et le bloc 31 la source des informations système émis dans les intervalles S0. Le bloc 32 schématise les circuits servant à traiter les informations échangées sur les autres canaux de contrôle communs, notamment de paging et d'accès aléatoire. Le bloc 33 schématise les circuits consacrés aux traitements et échanges d'informations sur les canaux de contrôle dédiés S1-S11 établis avec différents terminaux mobiles dans la cellule. Un multiplexeur 35 reçoit les signaux délivrés par les blocs 30 à 33 et construit les trames descendantes représentées à la partie supérieure de la figure 3 sous le contrôle d'un module 36 de synchronisation et de gestion des trames. Le flux de sortie du multiplexeur 35 est fourni à un modulateur 37 qui procède à la modulation autour de la fréquence porteuse $f_{CD}$ fournie par le module de synthèse de fréquence 38.

Pour la réception sur le canal de contrôle, la station de base comporte un démodulateur 49 qui démodule le signal reçu relativement à la fréquence porteuse $f_{CU}$ fournie par le module 38, et délivre au démultiplexeur 51 les trames binaires descendantes ayant la structure représentée à la partie inférieure de la figure 3. Sous le contrôle du module 36 de synchronisation et de gestion des trames, le démultiplexeur 51 extrait les informations pertinentes pour les canaux de contrôle communs 32 et les canaux de contrôle dédiés 33.

En plus du canal physique de contrôle, la station de base peut établir un certain nombre de canaux de trafic avec des terminaux mobiles situés à sa portée. Dans l'exemple simplifié représenté sur la figure 1, on considère que la station de base utilise une seule fréquence de trafic $f_{TD}$ dans le sens descendant et une seule fréquence de trafic $f_{TU}$ dans le sens montant, le bloc 40 désignant les circuits, supervisés par le module 36, servant aux traitements et échanges sur ces canaux de trafic et sur les canaux de contrôle associés.

Un modulateur 41 module le signal numérique produit par le bloc 40, qui a la structure représentée à la partie supérieure de la figure 4 ou 5, autour de la fréquence porteuse $f_{TD}$ délivrée par le module 38 de synthèse de fréquence. Un démodulateur 50 reçoit du module de synthèse 38 la fréquence $f_{TU}$ du canai de trafic montant. Le signal numérique résultant, qui a ta structure représentée à la partie inférieure de la figure 4 ou 5, est adressé aux circuits 40 de traitement du canal de trafic.

Lorsqu'un canal de trafic a été alloué, le module 36 de synchronisation et de gestion des trames commande le modulateur 41 et le démodulateur 50 afin d'activer le codage de la modulation et la prise en compte du schéma de démodulation correspondant seulement si le mode 2 est requis (figure 5).

En pratique, pour assurer l'accès multiple, la station de base comportera plusieurs modulateurs 41 et plusieurs démodulateurs 50 fonctionnant suivant les différentes fréquences de trafic.

Les signaux radio délivrés par les modulateurs 37 et 41 sont combinés par le sommateur 42. Le signal qui en résulte est converti en analogique en 43, puis amplifié en 44 avant d'être émis par l'antenne 45 de la station de base. Un duplexeur 46 extrait le signal radio capté par l'antenne 45 de la station de base, et le fournit à un amplificateur 47. Après numérisation 48, le signal reçu et amplifié est fourni aux démodulateurs 49 et 50.

Un terminal mobile communiquant avec la station de base ci-dessus peut être conforme au schéma synoptique de la figure 2. L'antenne 55 est reliée à un duplexeur 56 pour séparer les signaux émis et reçus. Le signal reçu est amplifié en 57, puis numérisé en 58 avant d'être adressé au démodulateur 59. Le terminal mobile comprend un module 60 de synchronisation et de gestion des trames, qui commande le module 61 de synthèse de fréquence pour qu'il fournisse au démodulateur 59 soit la fréquence $f_{CD}$ d'un canal physique de contrôle, soit la fréquence $f_{TD}$ d'un canal de trafic descendant alloué au terminal.

Lorsque le démodulateur 59 fonctionne à la fréquence $f_{CD}$, les trames de signal numérique, qui peuvent avoir la structure représentée à la partie supérieure de la figure 3 sont adressées à un démultiplexeur 64 commandé par le module de synchronisation 60 pour distribuer les signaux relevant des différents canaux logiques aux blocs 65, 66, 67, 68 qui désignent les circuits respectivement utilisés pour détecter les motifs de synchronisation sur le canal logique F, pour extraire les informations de système du canal logique S0, pour traiter les canaux de contrôle communs et pour traiter le canal de contrôle dédié Si éventuellement alloué au terminal. Le module 60 de synchronisation et de gestion des trames commande également un multiplexeur 70 qui forme la contribution du terminal aux trames montantes à la fréquence $f_{CU}$ (partie inférieure de la figure 3).

Lorsqu'un canal de trafic est alloué, le démodulateur 59 fonctionne à la fréquence $f_{TD}$ (sauf dans les fenêtres de scrutation), et son signal de sortie est adressé aux circuits 71 qui traitent le canal de trafic et les canaux de contrôle associés (réception des canaux DT, DL des figures 4 et 5). Ces circuits 71 délivrent en outre le flux à transmettre sur la fréquence $f_{TU}$, représenté sur la figure 4 ou 5 (canal de trafic et canaux associés UL, UT).

Le modulateur 72 du terminal mobile, contrôlé par le module 60, reçoit ou bien le flux délivré par le multiplexeur 70 et la fréquence $f_{CU}$ pour l'émission sur le canal physique de contrôle, ou bien le flux délivré par les circuits 71 et la fréquence $f_{TU}$ pour l'émission sur le canal de trafic. Le signal radio de sortie du modulateur 72 est converti en analogique en 73, et amplifié en 74 avant d'être émis par l'antenne 55.

Lorsqu'un canal de trafic a été alloué, le module 60 de synchronisation et de gestion des trames commande le modulateur 72 et le démodulateur 59 afin d'activer le codage de la modulation et la prise en compte du schéma de démodulation correspondant seulement si le mode 2 est requis (figure 5).

Dans les fenêtres de scrutation, le module 60 de synchronisation et de gestion des trames du terminal indique au module de synthèse de fréquence 61 la fréquence $f_{CD}$ à fournir au démodulateur 59, distincte de la fréquence $f_{CD}$ de la station de base de desserte. Il commande en outre le démultiplexeur 64 pour que le signal démodulé soit adressé au bloc 65 de détection du motif de synchronisation. Si le motif de synchronisation n'est pas détecté, le module 60 répète le même processus au cours de la prochaine fenêtre de scrutation, jusqu'à ce que la même fréquence $f_{CD}$ ait été scrutée M fois. Quand le motif de synchronisation est détecté dans une fenêtre de scrutation (données A sur la figure 2), le module 60 fait maintenir la même fréquence $f_{CD}$ au cours de la prochaine fenêtre, et il commande le démultiplexeur 64 pour que le signal démodulé soit adressé au bloc 66 d'extraction des informations système.

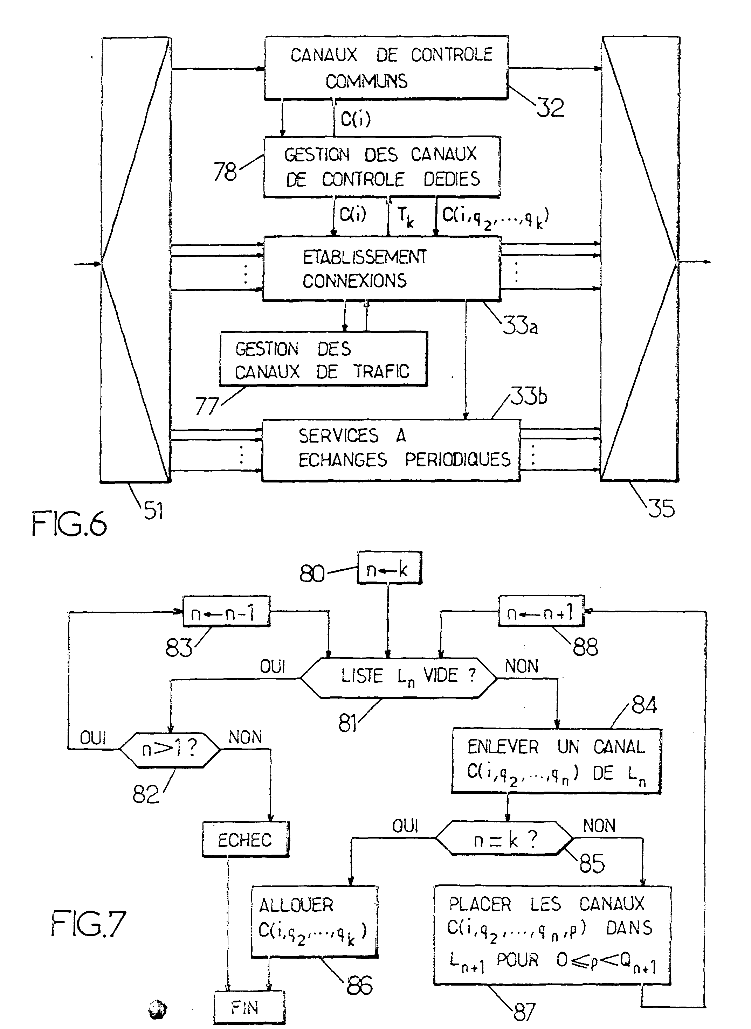

Dans la représentation de la figure 6, le bloc 33 de la figure 1 a été scindé en deux parties 33a et 33b. Dans la suite, on entend par « canai de référence » un canal formé, pour un index i donné, par l'ensemble des intervalles de temps Si sur une porteuse de contrôle $f_{CD}$ et/ou $f_{CU}$. On a vu que la périodicité moyenne de ces intervalles de temps Si est de $T_1 = 260$ ms dans chaque sens.

La référence 33a désigne un module consacré aux traitements et échanges d'informations sur ceux des canaux de contrôle dédiés S1-S11 qui constituent des canaux de signalisation utilisés pour l'établissement .de ressources dédiées (connexions) en réponse à de la signalisation échangée sur les canaux de contrôle communs. Un tel canal de signalisation, utilisé dans une phase transitoire d'établissement de connexion, est typiquement constitué par un canal de référence. Le module 33a réalise les opérations requises par les protocoles d'établissement d'appel employés dans le réseau.

La référence 33b désigne un module consacré aux traitements et échanges d'informations sur des canaux de contrôle dédiés qui sont utilisés pour supporter des services impliquant des échanges périodiques entre l'infrastructure et des terminaux mobiles. Un tel service utilise la totalité ou une fraction seulement d'un canal de référence, en fonction de la périodicité des échanges qu'il requiert entre l'infrastructure et le ou les terminaux mobiles concernés.

On note $T_k$ les différentes périodicités possibles pour les services ainsi supportés ($1 \leq k \leq N$), avec $T_N > T_{N-1} > ... > T_2 > T_1 = 260$ ms. On choisit de préférence ces périodicités de façon telle que, pour $1 < k \leq N$, on ait $T_k = Q_k.T_{k-1} = P_k.T_1$ avec $Q_k$ entier et

$$P_k = \prod_{n=2}^{k} Q_n .$$

Pour réaliser la périodicité $T_k$ ($k \geq 1$) au sein d'un canal de référence Si, on utilise un intervalle de temps Si tous les $P_k$ (avec $P_1 = 1$). On désigne par C(i) un canal logique entier, ou de rang 1, correspondant au canal de référence Si, et par C(i, $q_2$, ..., $q_k$) un canal logique fractionnaire de rang $k > 1$ formé d'un intervalle de temps Si tous les $P_k$, où i indexe le canal de référence Si et les entiers $q_n$ ($1 < n \leq k$) sont tels que $0 \leq q_n < Q_n$ et que le nombre

$$\sum_{n=2}^{k} q_n.P_{n-1}$$

repère la position modulo $P_k$ des intervalles de temps Si alloués au canal dans une multitrame de durée $T_N$ pouvant correspondre à une ou plusieurs supertrames. Chaque canal C(i, $q_2$, ..., $q_k$) de rang $k < N$ peut à son tour être divisé en $Q_{k+1}$ canaux fractionnaires de rang $k+1$, à savoir C(i, $q_2$, ..., $q_k$, $q_{k-1}$) pour $0 \leq q_{k+1} < Q_{k+1}$. Chaque périodicité $T_k$($1 \leq k \leq N$) est ainsi un multiple entier ou un diviseur de la période des supertrames, ce qui permet aux stations en communication de repérer les canaux fractionnaires par rapport à la synchronisation du système.

TABLEAU I

| k | Périodicité $T_k$ | $Q_k$ | $P_k$ |
|---|---|---|---|
| 1 | 260 ms | / | 1 |
| 2 | 780 ms | 3 | 3 |
| 3 | 2,34s | 3 | 9 |
| 4 | 7,02 s | 3 | 27 |
| 5 | 14,04 s | 2 | 54 |
| 6 | 28,08 s | 2 | 108 |

A titre d'exemple, le réseau peut supporter un service de localisation de certains terminaux mobiles, avec une périodicité réglable par l'utilisateur. Le terminal mobile peut être associé à un récepteur de localisation de type GPS ou analogue, qui fournit une estimation de sa position géographique sur la base de signaux captés en provenance d'un ensemble de satellites. En envoyant périodiquement ces estimations à l'infrastructure, on peut réaliser un suivi du porteur du terminal mobile. Selon les besoins de l'utilisateur, la mise à jour des informations transmises peut intervenir avec une périodicité plus ou moins grande, par exemple comme indiqué dans le Tableau I, où la multitrame correspond à deux supertrames de 14,04 s.

Lorsqu'on a choisi une période $T_k$ relativement longue, un terminal mobile en cours de communication est peu perturbé par le service de localisation. La coupure de la transmission de parole due à l'envoi du message de localisation dans un intervalle de temps Si sur la fréquence $f_{CU}$ est de 40 ms à chaque période $T_k$, ce qui est imperceptible si $T_k$ est de l'ordre d'une ou plusieurs dizaines de secondes, surtout si on tient compte des capacités d'interpolation de la plupart des vocodeurs modernes. On peut éventuellement prévoir, dans le protocole d'établissement d'appel, que la périodicité $T_k$ du service de localisation soit augmentée pendant le déroulement d'une communication de phonie.

La figure 6 montre encore deux modules 77, 78 qui gèrent l'allocation des ressources dédiées. Le module 77 gère de façon classique l'allocation des fréquences de trafic $f_{TD}$, $f_{TU}$ en fonction des disponibilités au fur et à mesure des demandes et libérations de canaux.

Le module 78 gère quant à lui l'allocation des intervalles de temps Si sur les fréquences de contrôle $f_{CD}$, $f_{CU}$ (canaux entiers et fractionnaires). Lorsqu'une requête d'établissement de connexion est reçue ou envoyée à un terminal mobile par le module 32, un canal dédié de rang 1 est d'abord demandé pour la poursuite du dialogue de signalisation. Le module de gestion 78 alloue ce canal C(i) et l'indique au module 33a pour qu'il l'utilise, et au module 32 pour qu'il le signifie au terminal mobile. Si la requête se rapporte à un canal de trafic, elle est traitée par le module 77. Sinon, elle est transmise au module 78 avec la périodicité voulue $T_k$ qui a été spécifiée, par l'infrastructure ou par le terminal mobile, dans le cadre du protocole d'établissement d'appel. Après l'allocation d'un canal logique C(i, $q_2$, ..., $q_k$) de rang k par le module 78, l'établissement de la connexion se termine par l'envoi d'un identifiant de ce canal au terminal mobile ainsi qu'au module 33b pour qu'il soit utilisé pour les transmissions requises par le service considéré.

La figure 7 montre un organigramme d'une procédure d'allocation de canaux dédiés à périodicité variable que peut appliquer le module 78 en réponse à une demande de canal de rang $k \geq 1$.

Cette procédure utilise, pour chaque rang n ≤

N, une liste $L_n$ de canaux libres de rang n, désignés par les indices i, $q_1$, ..., $q_n$. Initialement, la liste $L_1$ contient tous les indices i des intervalles de temps Si, et chaque liste $L_n$ avec n > 1 est vide. En réponse à la demande de canal de rang k ≥ 1, les valeurs de l'index d'itération n sont parcourues dans le sens décroissant à partir de n = k (initialisation 80) jusqu'à trouver un canal libre de rang n, après quoi on met à jour les listes $L_n$ à $L_k$. A chaque itération n, on examine si la liste $L_n$ est vide (test 81). Si $L_n$ est vide et si n = 1 (test 82), la procédure d'allocation échoue en raison de l'indisponibilité de la ressource demandée. Si $L_n$ est vide et si n > 1, l'index n est décrémenté à l'étape 83 avant de revenir au test 81 pour l'itération suivante. Quand le test 81 montre que la liste $L_n$ contient un ou plusieurs canaux logiques libres de rang n, l'un de ces canaux $C(i, q_2, ..., q_n)$ est sélectionné et retiré de la liste $L_n$ à l'étape 84, puis l'index d'itération n est comparé au rang k du canal demandé (test 85). Si n = k, la procédure se termine par l'allocation du canal logique $C(i, q_2, ..., q_k)$ à l'étape 86. Si n < k, tous les canaux frères de rang n+1 qu'on peut obtenir par subdivision du canal $C(i, q_2, ..., q_n)$ (à savoir $C(i, q_2, ..., q_n, p)$ pour $0 ≤ p < Q_{n+1}$) sont placés dans la liste $L_{n+1}$ à l'étape 87, puis l'index n est incrémenté à l'étape 88 avant de revenir au test 81 pour l'itération suivante.

La figure 8 montre un organigramme d'une procédure de libération d'un canal $C(i, q_2, ..., q_k)$ de rang k ≥ 1 précédemment alloué. Cette procédure peut compléter la procédure d'allocation de la figure 7.

En réponse à la demande de libération du canal $C(i, q_2, ..., q_k)$, les valeurs de l'index d'itération n sont parcourues dans le sens décroissant à partir de n = k (initialisation 90) jusqu'à n = 1 afin de mettre à jour les listes $L_k$ à $L_1$ si nécessaire. A chaque itération n, le canal logique $C(i, q_2, ..., q_n)$ est replacé dans la liste $L_n$ à l'étape 91, puis l'index n est comparé à 1 (test 92). Si n > 1, on vérifie au test 93 si la liste $L_n$ contient tout les canaux logiques frères du canal venant d'être replacé dans cette liste $L_n$, à savoir tous les canaux $C(i, q_2, ..., q_{n-1}, p)$ pour $0 ≤ p < Q_n$. Dans l'affirmative, tous ces canaux $C(i, q_2, ..., q_{n-1}, p)$ sont supprimés de la liste $L_n$ à l'étape 94, puis l'index n est décrémenté à l'étape 95 avant de revenir à l'étape 91 pour l'itération suivante. La procédure de libération se termine quand le test 92 montre n = 1 ou quand le test 92 montre qu'une liste $L_n$ mise à jour $L_n$ ne contient pas tous les canaux frères de celui venant d'être réintégré à cette liste.

Selon l'ordre dans lequel des canaux fractionnaires précédemment alloués sont libérés, on peut arriver à des situations dans lesquelles l'occupation de quelques canaux de rang relativement élevé (à périodicité longue) mal distribués rende indisponible un nombre excessif de canaux d'un rang plus faible. Pour éviter cela, on peut prévoir qu'une partie seulement des intervalles Si fournisse des canaux fractionnaires et soit soumise à l'algorithme d'allocation et de libération des figures 7 et 8. Si nécessaire, on peut en outre envisager d'avoir recours à des transferts de canaux (handovers) sur la porteuse de contrôle pour réorganiser les listes $L_n$ en regroupant les canaux de rang relativement élevé dans les mêmes branches de l'arbre d'occupation afin de libérer des canaux de rangs inférieurs.

Le même procédé peut être utilisé pour mettre en oeuvre un service de messagerie (paging) en mode connecté à destination de terminaux ou récepteurs de messagerie simplifiés. Ces terminaux de messagerie peuvent être des terminaux spécifiques, dont les caractéristiques principales sont la petite taille, la faible consommation liée à un état de veille fréquent qui limite la consommation moyenne grâce à une extinction de la plupart des circuits à l'exception d'une horloge basse fréquence qui contrôle le réveil périodique et la présence d'une antenne intégrée au boîtier du terminal dont le rendement est généralement médiocre, avec un gain généralement inférieur de 7 à 8 dB par rapport au gain des antennes des terminaux mobiles. Pour offrir une couverture similaire à celle des autres terminaux mobiles, le système de radiocommunication utilise un codage de canal spécifique pour la transmission de données à destination des terminaux de messagerie. Ce codage à fort gain, offrant donc un débit de données réduit, est différent de celui utilisé pour les autres terminaux mobiles. De plus, compte tenu de la faiblesse des débits nécessaires dans ce type d'application, où le message est généralement un message d'alerte des personnels en situation d'astreinte, de nature quasi-binaire, une faible périodicité des intervalles de temps réservés à ce service sera choisie. A titre d'exemple, chacun des intervalles contient 40 bits d'information obtenus à partir de 280 bits, grâce à un codage de rendement 1/7 qui fournit le gain de codage nécessaire pour compenser le gain réduit de l'antenne du terminal de messagerie.

Un des canaux dédiés fractionnaires $C(ip, qp_2, ..., qp_k)$ peut être réservé à ce service de messagerie. On pourra choisir, selon les temps d'alerte voulus, une périodicité $T_k$ allant de 2,34 à 28,08 secondes, par exemple ($T_3$ à $T_6$ du Tableau I). Avec la façon précédemment décrite d'allouer les canaux dédiés, il suffit d'exclure le canal fractionnaire en question dans la procédure d'allocation de la figure 7 pour que les terminaux mobiles normaux ne cherchent pas à décoder les intervalles de temps correspondants. Pour cela, on enlève les canaux $C(ip, qp_2, ..., qp_n)$ des listes $L_n$ pour $1 ≤ n ≤$ k. Dans ces conditions, le fonctionnement des terminaux mobiles normaux n'est pas perturbé par la présence d'un codage de canal différent sur le canal fractionnaire $C(ip, qp_2, ..., qp_k)$.

Il suffit que, de temps à autre, une séquence de bits particulière soit transmise sur un intervalle de temps réservé au service de paging pour que les terminaux de messagerie reconnaissent la présence de ce canal et se synchronisent pour la réception ultérieure des informations.

Les applications des canaux fractionnaires dédiés décrites précédemment ne sont pas limitatives. On pourra également utiliser le procédé selon l'invention pour la réalisation de systèmes de radiocommunication professionnelle où certains terminaux sont utilisés pour des fonctions de télécommande ou de télémesure avec des périodicités de commande ou de transmission d'informations variables, d'un terminal à l'autre ou pour un même terminal, en fonction des circonstances.

## Revendications

1. Procédé de radiocommunication entre une station de base et des terminaux mobiles, dans lequel au moins une fréquence porteuse ($f_{CD}$, $f_{CU}$) est partagée en intervalles de temps, et des canaux logiques sont formés entre la station de base et des terminaux mobiles pour supporter des services en relation avec lesdits terminaux mobiles, chacun de ces canaux logiques étant formé d'intervalles de temps récurrents alloués à au moins un terminal mobile sur ladite fréquence porteuse, **caractérisé en ce que** les intervalles de temps de certains au moins desdits canaux logiques ont une fréquence de récurrence sélectionnée parmi plusieurs valeurs possibles, et **en ce que**, pour mettre en oeuvre un desdits services qui implique une transmission d'informations mises à jour périodiquement, on sélectionne parmi lesdites valeurs une fréquence de récurrence sensiblement égale à l'inverse de la période de mise à jour desdites informations, et on forme un canal logique entre la station de base et un terminal mobile en allouant des intervalles de temps ayant la fréquence de récurrence sélectionnée sur la fréquence porteuse.

2. Procédé selon la revendication 1, dans lequel la fréquence de récurrence des intervalles de temps alloués à l'établissement d'un canal logique supportant un service qui requiert une transmission d'informations mises à jour périodiquement est sélectionnée parmi un ensemble de valeurs de la forme $1/T_k$ ($k = 1, 2, 3, ...$) telles que $T_{k+1}/T_k$ soit un nombre entier pour tout $k$, $T_1$ étant une périodicité de base des intervalles de temps sur la fréquence porteuse.

3. Procédé selon la revendication 2, dans lequel des canaux de référence dont les intervalles de temps ont la périodicité $T_1$ sont définis sur la fréquence porteuse, et dans lequel, à mesure de l'allocation d'intervalles de temps ayant des fréquences de récurrence de la forme $1/T_k$ avec $k > 1$, on subdivise certains au moins desdits canaux de référence pour former les canaux logiques correspondants.

4. Procédé selon la revendication 2 ou 3, dans lequel chaque périodicité $T_k$ ($k \geq 1$) est un multiple entier ou un diviseur d'une période de supertrame égale au plus petit commun multiple d'une première période de trame définie pour le partage temporel de ladite fréquence porteuse et d'une seconde période de trame définie pour le partage temporel d'une autre fréquence porteuse supportant des canaux de trafic, notamment de phonie.

5. Procédé selon l'une quelconque des revendications 1 à 4, dans lequel un desdits services est un service de localisation de terminal mobile, suivant lequel un terminal mobile transmet automatiquement des informations sur sa localisation géographique, avec une périodicité réglable.

6. Procédé selon l'une quelconque des revendications 1 à 5, dans lequel un desdits services est un service de messagerie pour délivrer périodiquement des messages à une catégorie particulière de terminaux mobiles.

7. Station de base de radiocommunication, comprenant des moyens (35, 51) de multiplexage, sur au moins une fréquence porteuse ($f_{CD}$, $f_{CU}$), de canaux logiques pour supporter des services en relation avec des terminaux mobiles, chacun de ces canaux logiques étant formé d'intervalles de temps récurrents alloués à au moins un terminal mobile sur ladite fréquence porteuse, **caractérisée en ce que** les intervalles de temps de certains au moins desdits canaux logiques ont une fréquence de récurrence sélectionnée parmi plusieurs valeurs possibles, et **en ce qu'**elle comprend des moyens (33a, 78) d'établissement de canaux, agencés pour établir au moins un desdits canaux logiques supportant un service qui implique une transmission d'informations mises à jour périodiquement, en allouant des intervalles de temps dont la fréquence de récurrence sur la fréquence porteuse est sélectionnée parmi lesdites valeurs, comme étant sensiblement l'inverse de la période de mise à jour desdites informations.

8. Station de base selon la revendication 7, dans laquelle les moyens d'établissement de canaux (78) sont agencés pour allouer des intervalles de temps dont la fréquence de récurrence est sélectionnée parmi un ensemble de valeurs de la forme $1/T_k$ ($k = 1, 2, 3, ...$) telles que $T_{k+1}/T_k$ soit un nombre entier pour tout $k$, $T_1$ étant une périodicité de base des intervalles de temps sur la fréquence porteuse.

9. Station de base selon la revendication 8, dans laquelle des canaux de référence dont les intervalles de temps ont la périodicité $T_1$ sont définis sur la fréquence porteuse, et dans laquelle les moyens d'établissement de canaux (78) subdivisent certains au moins desdits canaux de référence pour former des canaux logiques à mesure de l'allocation d'intervalles de temps ayant des fréquences de récurrence de la forme $1/T_k$ avec $k > 1$.

**10.** Station de base selon la revendication 8 ou 9, dans laquelle chaque périodicité $T_k$ ($k \geq 1$) est un multiple entier ou un diviseur d'une période de supertrame égale au plus petit commun multiple d'une première période de trame définie pour le partage temporel de ladite fréquence porteuse et d'une seconde période de trame définie pour le partage temporel d'une autre fréquence porteuse supportant des canaux de trafic, notamment de phonie.

**11.** Station de base selon l'une quelconque des revendications 7 à 10, dans laquelle un desdits services est un service de localisation de terminal . mobile, suivant lequel un terminal mobile transmet automatiquement des informations sur sa localisation géographique, avec une périodicité réglable.

**12.** Station de base selon l'une quelconque des revendications 7 à 11, dans laquelle un desdits services est un service de messagerie pour délivrer périodiquement des messages à une catégorie particulière de terminaux mobiles.

**13.** Terminal mobile de radiocommunication, comprenant des moyens (68) pour communiquer sur au moins une fréquence porteuse ($f_{CD}$, $f_{CU}$) partagée en intervalles de temps, selon au moins un canal logique formé avec une station de base d'une infrastructure radio pour supporter un service en relation avec le terminal mobile, ledit canal logique étant formé d'intervalles de temps récurrents alloués au terminal mobile sur ladite fréquence porteuse, **caractérisé en ce que** les intervalles de temps dudit canal logique ont une fréquence de récurrence sélectionnée parmi plusieurs valeurs possibles, et **en ce que** lesdits moyens sont agencés pour communiquer selon ledit canal logique, supportant un service qui implique une transmission d'informations mises à jour périodiquement, dans des intervalles de temps dont la fréquence de récurrence sur la fréquence porteuse est sélectionnée, parmi lesdites valeurs, comme étant sensiblement l'inverse de la période de mise à jour desdites informations.

**14.** Terminal mobile selon la revendication 13, dans lequel la fréquence de récurrence des intervalles de temps formant ledit canal logique appartient à un ensemble de valeurs de la forme $1/T_k$ ($k = 1, 2, 3, ...$) telles que $T_{k+1}/T_k$ soit un nombre entier pour tout k, $T_1$ étant une périodicité de base des intervalles de temps sur la fréquence porteuse.

**15.** Terminal mobile selon la revendication 14, dans lequel des canaux de référence dont les intervalles de temps ont la périodicité $T_1$ sont définis sur la fréquence porteuse, et dans lequel, à mesure de l'allocation d'intervalles de temps ayant des fréquences de récurrence de la forme $1/T_k$ avec $k > 1$, certains au moins desdits canaux de référence sont subdivisés pour former les canaux logiques correspondants.

**16.** Terminal mobile selon la revendication 14 ou 15, dans lequel chaque périodicité $T_k$ ($k \geq 1$) est un multiple entier ou un diviseur d'une période de supertrame égale au plus petit commun multiple d'une première période de trame définie pour le partage temporel de ladite fréquence porteuse et d'une seconde période de trame définie pour le partage temporel d'une autre fréquence porteuse supportant des canaux de trafic, notamment de phonie.

**17.** Terminal mobile selon l'une quelconque des revendications 13 à 16, dans lequel un desdits services est un service de localisation, suivant lequel le terminal mobile transmet automatiquement des informations sur sa localisation géographique, avec une périodicité réglable.

**18.** Terminal mobile selon l'une quelconque des revendications 13 à 16, formant un récepteur de messagerie recevant périodiquement des messages depuis l'infrastructure radio suivant ledit canal logique.

**Patentansprüche**

**1.** Funkkommunikationsverfahren zwischen einer Basisstation und mobilen Endgeräten, bei dem wenigstens eine Trägerfrequenz ($f_{CD}$, $f_{CU}$) in Zeitintervalle aufgeteilt ist, und logische Kanäle zwischen der Basisstation und den mobilen Endgeräten gebildet sind, um Dienste im Zusammenhang mit diesen mobilen Endgeräten zu unterstützen, wobei jeder dieser logischen Kanäle von rückläufigen Zeitintervallen gebildet ist, welche wenigstens einem mobilen Endgerät auf der Trägerfrequenz zugeordnet sind, **dadurch gekennzeichnet,**
**dass** die Zeitintervalle wenigstens bestimmter dieser logischen Kanäle eine aus mehreren möglichen Werten ausgewählte Rücklauffrequenz aufweisen, und dass zum Benutzen einer der Dienste, welcher eine Übertragung von regelmäßig aktualisierten Informationen impliziert, aus den Werten eine Rücklauffrequenz ausgewählt wird, die im wesentlichen gleich der Inversen der Periode der Aktualisierung der Informationen ist, und ein logischer Kanal zwischen der Basisstation und einem mobilen Endgerät gebildet wird, wobei die Zeitintervalle, welche die ausgewählte Rücklauffrequenz aufweisen, auf der Trägerfrequenz zugeordnet werden.

**2.** Verfahren nach Anspruch 1, bei dem die Rücklauffrequenz der Zeitintervalle, welche der Herstellung eines logischen Kanals zugeordnet sind, welcher einen Dienst unterstützt, der eine Übertragung regelmäßig aktualisierter Informationen erfordert, aus einer Menge von Werten der Form $1/T_k$ (k = 1, 2, 3, ...) ausgewählt wird, so dass $T_{k+1}/T_k$ eine ganze Zahl ist für alle k, wobei $T_1$ eine Basisperiodizität der Zeitintervalle auf der Trägerfrequenz ist.

3. Verfahren nach Anspruch 2, bei dem die Referenzkanäle deren Zeitintervalle die Periodizität $T_1$ aufweisen, auf der Trägerfrequenz definiert sind und bei dem wenigstens bestimmte dieser Referenzkanäle in dem Maß unterteilt werden wie die Allokation der Zeitintervalle Rücklauffrequenzen der Form $1/T_k$ mit k > 1 aufweisen, um die entsprechenden logischen Kanäle zu bilden.

4. Verfahren nach Anspruch 2 oder 3, bei dem jede Periodizität $T_k$ (k ≥ 1) ein ganzes Vielfaches oder ein Teiler einer Super-Datenübertragungsblock-Periode ist, welche gleich dem kleinsten gemeinsamen Vielfachen ist von einer ersten Datenblockperiode, die für die zeitliche Aufteilung der Trägerfrequenz definiert ist, und von einer zweiten Datenblockperiode, die für die zeitliche Aufteilung einer anderen Trägerfrequenz definiert ist, welche Verkehrskanäle unterstützt, insbesondere Telefonie.

5. Verfahren nach einem der Ansprüche 1 bis 4, bei dem einer der Dienste ein Dienst zur Lokalisierung mobilen Endgeräts ist, gemäß dem ein mobiles Endgerät automatisch Informationen über seine geographische Lokalisierung überträgt, und zwar mit einer einstellbaren Periodizität.

6. Verfahren nach einem der Ansprüche 1 bis 5, bei dem einer der Dienste ein Mitteilungsdienst ist zum regelmäßigen Zustellen von Mitteilungen an eine bestimmte Kategorie mobiler Endgeräte.

7. Funkkommunikations-Basisstation, umfassend Mittel (35, 51) zum Multiplexen auf wenigstens einer Trägerfrequenz ($f_{CD}$, $f_{CU}$) von logischen Kanälen, um Dienste zu unterstützen, die in Verbindung mit mobilen Endgeräten stehen, wobei jeder dieser logischen Kanäle von Rücklauf-Zeitintervallen gebildet ist, welche wenigstens einem mobilen Endgerät auf der Trägerfrequenz zugeordnet sind, **dadurch gekennzeichnet, dass** die Zeitintervalle wenigstens bestimmter dieser logischen Kanäle eine aus mehreren möglichen Werten ausgewählte Rücklauffrequenz aufweisen, und dass sie Mittel (33a, 78) zur Kanalherstellung umfasst, welche eingerichtet sind, wenigstens einen der logischen Kanäle herzustellen, welcher einen Dienst unterstützt, der eine Übertragung periodisch aktualisierter Informationen impliziert, wobei die Zeitintervalle, deren Rücklauffrequenz auf der Trägerfrequenz aus den Werten ausgewählt ist, zugeordnet werden, wie wenn sie im wesentlichen die Inverse der Periode der Aktualisierung der Informationen sind.

8. Basisstation nach Anspruch 7, bei der die Mittel (78) zur Kanalherstellung eingerichtet sind, Zeitintervalle zuzuordnen deren Rücklauffrequenz aus einer Menge von Werten der Form $1/T_k$ (k = 1, 2, 3, ...) ausgewählt ist, so dass $T_{k+1}/T_k$ eine ganze Zahl ist für alle k, wobei $T_1$ eine Basisperiodizität der Zeitintervalle auf der Trägerfrequenz ist.

9. Basisstation nach Anspruch 8, bei der die Referenzkanäle deren Zeitintervalle die Periodizität $T_1$ aufweisen, auf der Trägerfrequenz definiert sind und in welcher die Mittel (78) zur Kanalherstellung wenigstens bestimmte dieser Referenzkanäle unterteilen, um logische Kanäle in dem Maß wie die Allokation der Zeitintervalle Rücklauffrequenzen der Form $1/T_k$ mit k > 1 aufweisen zu bilden.

10. Basisstation nach Anspruch 8 oder 9, bei der jede Periodizität $T_k$ (k ≥ 1) ein ganzes Vielfaches oder ein Teiler einer Super-Datenübertragungsblock-Periode ist, welche gleich dem kleinsten gemeinsamen Vielfachen ist von einer ersten Datenblockperiode, die für die zeitliche Aufteilung der Trägerfrequenz definiert ist, und von einer zweiten Datenblockperiode, die für die zeitliche Aufteilung einer anderen Trägerfrequenz definiert ist, welche Verkehrskanäle unterstützt, insbesondere Telefonie.

11. Basisstation nach einem der Ansprüche 7 bis 10, bei der einer der Dienste ein Dienst zur Lokalsierung mobilen Endgeräts ist, gemäß dem ein mobiles Endgerät automatisch Informationen über seine geographische Lokalisierung überträgt, und zwar mit einer einstellbaren Periodizität.

12. Basisstation nach einem der Ansprüche 7 bis 11, bei der einer der Dienste ein Mitteilungsdienst ist zum regelmäßigen Zustellen von Mitteilungen an eine bestimmte Kategorie mobiler Endgeräte.

13. Mobiles Funkkommunikations-Endgerät, umfassend Mittel (68) zum Kommunizieren auf wenigstens einer Trägerfrequenz ($f_{CD}$, $f_{CU}$), welche in Zeitintervalle aufgeteilt ist entsprechend wenigstens einem mit einer Basisstation einer Funkinfrastruktur gebildeten logischen Kanal zum Unterstützen eines Dienstes in Verbindung mit dem mobilen Endgerät, wobei der logische Kanal aus rücklaufenden Zeitintervallen gebildet ist, welche dem mobilen Endgerät auf der Trägerfrequenz zugeordnet sind, **dadurch gekennzeichnet, dass** die Zeitintervalle dieses logischen Kanals eine aus mehreren möglichen Werten ausgewählte Rücklauffrequenz aufweisen und dass die Mittel eingerichtet sind zum Kommunizieren auf dem logischen Kanal, welcher einen Dienst unterstützt, der eine Übertragung periodisch aktualisierter Informationen impliziert, in Zeitinervallen deren Rücklauffrequenz auf der Trägerfrequenz aus den Werten ausgewählt ist, wie wenn sie im wesentlichen die Inverse der Periode der Aktualisierung der Informationen ist.

14. Mobiles Endgerät nach Anspruch 13, bei dem die Rücklauffrequenz der Zeitintervalle, welche den logischen Kanal bildet, zu einer Menge von Werten der Form $1/T_k$ (k = 1, 2, 3, ...) gehört, so dass $T_{k+1}/T_k$ eine ganze Zahl ist für alle k, wobei T, eine Basisperiodizität der Zeitintervalle auf der Trägerfrequenz ist.

15. Mobiles Endgerät nach Anspruch 14, bei dem die Referenzkanäle deren Zeitintervalle die Periodizität $T_1$ aufweisen, auf der Trägerfrequenz definiert sind, und bei dem in dem Maß wie die Allokation der Zeitintervalle Rücklauffrequenzen der Form $1/T_k$ mit k > 1 aufweisen, wenigstens bestimmte dieser Referenzkanäle unterteilt sind zum Bilden entsprechender logischer Kanäle.

16. Mobiles Endgerät nach Anspruch 14 oder 15, bei dem jede Periodizität $T_k$ (k ≥ 1) ein ganzes Vielfaches oder ein Teiler einer Super-Datenübertragungsblock-Periode ist, welche gleich dem kleinsten gemeinsamen Vielfachen ist von einer ersten Datenblockperiode, die für die zeitliche Aufteilung der Trägerfrequenz definiert ist, und von einer zweiten Datenblockperiode, die für die zeitliche Aufteilung einer anderen Trägerfrequenz definiert ist, welche Verkehrskanäle unterstützt, insbesondere Telefonie.

17. Mobiles Endgerät nach einem der Ansprüche 13 bis 16, bei dem einer der Dienste ein Lokalisierungsdienst ist, gemäß dem das mobile Endgerät automatisch Informationen über seine geografische Lokalisierung überträgt, und zwar mit einer einstellbaren Periodizität.

18. Mobiles Endgerät nach einem der Ansprüche 13 bis 16, das einen Mitteilungsempfänger bildet, welcher periodisch Mitteilungen von der Funkinfrastruktur auf dem logischen Kanal empfängt.

**Claims**

1. A method of radio communications between a base station and mobile terminals, wherein at least one carrier frequency ($f_{CD}$, $f_{CU}$) is apportioned to timeslots, and logical channels are formed between the base station and mobile terminals to support services in connection with said mobile terminals, each of said logical channels consisting of recurring timeslots allocated to at least one mobile terminal on said carrier frequency, **characterized in that**, to implement one of said services which involves transmission of periodically updated information, a recurrence frequency is selected from a plurality of possible values, as being substantially the inverse of the updating period for said information, and a logical channel is formed between the base station and a mobile terminal by allocating timeslots having the selected recurrence frequency on the carrier frequency.

2. The method as claimed in claim 1, wherein the recurrence frequency of the timeslots allocated when establishing a logical channel supporting a service which requires transmission of periodically updated information is selected from a set of values of the form $1/T_k$ (k = 1, 2, 3, ...) such that $T_{k+1}/T_k$ is an integer for any k, $T_1$ being a basic timeslot periodicity on the carrier frequency.

3. The method as claimed in claim 2, wherein reference channels, having timeslots of periodicity $T_1$, are defined on the carrier frequency, and wherein, as timeslots having recurrence frequencies of the form $1/T_k$ with k > 1 are allocated, at least some of said reference channels are subdivided to form the corresponding logical channels.

4. The method as claimed in claim 2 or 3, wherein each periodicity $T_k$ (k ≥ 1) is an integer multiple or a divider of a superframe period equal to the smallest common multiple of a first frame period defined for the time-division sharing of said carrier frequency and of a second frame period defined for the time-division sharing of another carrier frequency supporting traffic, in particular voice, channels.

5. The method as claimed in any one of claims 1 to 4, wherein one of said services is a mobile-terminal location service, in which a mobile terminal automatically transmits information on its geographical location, with an adjustable periodicity.

6. The method as claimed in any one of claims 1 to 5, wherein one of said services is a messaging service for periodically delivering messages to a particular category of mobile terminals.

7. A radio communications base station, comprising means (35, 51) for multiplexing logical channels on at least one carrier frequency ($f_{CD}$, $f_{CU}$) to support services in connection with mobile terminals, each of said logical channels consisting of recurring timeslots allocated to at least one mobile terminal on said carrier frequency, **characterized by** channel-establishing means (33a, 78), arranged to establish at least one of said logical channels supporting a service which involves transmission of periodically updated information, by allocating timeslots on the carrier frequency, having a recurrence frequency selected, from a plurality of possible values, as being substantially the inverse of the updating period for said information.

8. The base station as claimed in claim 7, wherein the channel-establishing means (78) are arranged to allocate timeslots having a recurrence frequency selected from a set of values of the form $1/T_k$ (k = 1, 2, 3, ...) such that $T_{k+1}/T_k$ is an integer for any k, $T_1$ being a basic timeslot periodicity on the carrier frequency.

9. The base station as claimed in claim 8, wherein reference channels, having timeslots of periodicity $T_1$, are defined on the carrier frequency, and wherein the channel-establishing means (78) subdivide at least some of said reference channels to form logical channels as timeslots having recurrence frequencies of the form $1/T_k$ with k > 1 are allocated.

10. The base station as claimed in claim 8 or 9, wherein each periodicity $T_k$ (k ≥ 1) is an integer multiple or a divider of a superframe period equal to the smallest common multiple of a first frame period defined for the time-division sharing of said carrier frequency and of a second frame period defined for the time-division sharing of another carrier frequency supporting traffic, in particular voice, channels.

11. The base station as claimed in any one of claims 7 to 10, wherein one of said services is a mobile-terminal location service, in which a mobile terminal automatically transmits information on its geographical location, with an adjustable periodicity.

12. The base station as claimed in any one of claims 7 to 11, wherein one of said services is a messaging service for periodically delivering messages to a particular category of mobile terminals.

13. A mobile radio communications terminal, comprising means for communicating on at least one carrier frequency ($f_{CD}$, $f_{CU}$) apportioned to timeslots, along at least one logical channel formed with a base station of a radio infrastructure to support a service in connection with the mobile terminal, said logical channel consisting of recurring timeslots allocated to the mobile terminal on said carrier frequency, **characterized in that** said means are arranged to communicate along said logical channel, supporting a service which involves transmission of periodically updated information, in timeslots on the carrier frequency having a recurrence frequency selected, from a plurality of possible values, as being substantially the inverse of the updating period for said information.

14. The mobile terminal as claimed in claim 13, wherein the recurrence frequency of the timeslots forming said logical channel belongs to a set of values of the form $1/T_k$ (k = 1, 2, 3, ...) such that $T_{k+1}/T_k$ is an integer for any k, $T_1$ being a basic timeslot periodicity on the carrier frequency.

15. The mobile terminal as claimed in claim 14, wherein reference channels, having timeslots of periodicity $T_1$, are defined on the carrier frequency, and wherein, as timeslots having recurrence frequencies of the form $1/T_k$ with k > 1 are allocated, at least some of said reference channels are subdivided to form the corresponding logical channels.

16. The mobile terminal as claimed in claim 14 or 15, wherein each periodicity $T_k$ (k ≥ 1) is an integer multiple or a divider of a superframe period equal to the smallest common multiple of a first frame period defined for the time-division sharing of said carrier frequency and of a second frame period defined for the time-division sharing of another carrier frequency supporting traffic, in particular voice, channels.

17. The mobile terminal as claimed in any one of claims 13 to 16, wherein one of said services is a location service, in which the mobile terminal automatically transmits information on its geographical location, with an adjustable periodicity.

18. The mobile terminal as claimed in any one of claims 13 to 16, forming a messaging receiver periodically receiving messages from the radio infrastructure along said logical channel.

FIG.1.

30 — MOTIF DE SYNCHRONISATION

31 — INFORMATIONS SYSTÈME

32 — CANAUX DE CONTRÔLE COMMUNS

33 — CANAUX DE CONTRÔLE DÉDIÉS

35

37 — MODUL.

51

36 — SYNCHRONISATION GESTION DE TRAMES

40 — CANAUX DE TRAFIC ET DE CONTRÔLE ASSOCIÉS

41 — MODUL.

$f_{TD}$   $f_{CD}$

38 — SYNTHÈSE DE FRÉQUENCE

$f_{CU}$   $f_{TU}$

50 — DÉMODUL.

49 — DÉMODUL.

42

43 — CNA

44

46 — D

45

47

48 — CAN

EP 1 198 906 B1

# FIG.2.

## FIG.3.

$f_{CD}$: F | | S0 | S6 | S1 | S7 | S2 | S8 | S3 | S9 | S4 | S10 | S5 | S11 | P | S6 | S1 | S7 | S2 | S8 | S3 | S9 | S4 | S10 | S5 | S11

$f_{CU}$: S9 | S4 | S10 | S5 | S11 | | | S6 | S1 | S7 | S2 | S8 | S3 | S9 | S4 | S10 | S5 | S11 | | S6 | S1 | S7 | S2 | S8 | S3

(groupes 1 2 3 4 5 6 7 8 9 10 11 12 13)

## FIG.8

95 — $n \leftarrow n-1$

90 — $n \leftarrow k$

91 — PLACER LE CANAL $C(i, q_2, \ldots q_n)$ DANS LA LISTE $L_n$

92 — $n > 1?$  OUI / NON

94 — SUPPRIMER LES CANAUX $C(i, q_2, \ldots, q_{n-1}, p)$ DE LA LISTE $L_n$ POUR $0 \leqslant p < Q_n$

93 — $L_n$ CONTIENT $C(i, q_2, \ldots, q_{n-1}, p)$ POUR $0 \leqslant p < Q_n$  OUI / NON

FIN

EP 1 198 906 B1

FIG.4.

EP 1 198 906 B1

| | 1 | 2 | 3 | 4 | 5 | 6 | 7 | 8 | 9 |
|---|---|---|---|---|---|---|---|---|---|
| $f_{TD}$ | T | T | T | T | T | T | T | T | DT |
| $f_{TU}$ | T | T | T | T | T | T | T | T | UL |

FIG.5.

| | 10 | 11 | 12 | 13 | 14 | 15 | 16 | 17 | 18 |
|---|---|---|---|---|---|---|---|---|---|
| $f_{TD}$ | T | T | T | T | T | T | T | T | DL |
| $f_{TU}$ | T | T | T | T | T | T | T | T | UT |

| | 19 | 20 | 21 | 22 | 23 | 24 | 25 | 26 | 27 |
|---|---|---|---|---|---|---|---|---|---|
| $f_{TD}$ | T | T | T | T | T | T | T | T | |
| $f_{TU}$ | T | T | T | T | T | T | T | T | |

FIG.6

FIG.7